**Europäisches Patentamt**

**European Patent Office**

**Office européen des brevets**

(19)

(11) Veröffentlichungsnummer: **0 106 916**
**B1**

# (12) EUROPÄISCHE PATENTSCHRIFT

(45) Veröffentlichungstag der Patentschrift:
23.04.86

(21) Anmeldenummer: 82111107.7

(22) Anmeldetag: 01.12.82

(51) Int. Cl.⁴: **C 02 F 1/52**, C 02 F 1/54,
C 02 F 1/56, C 02 F 1/28

(54) **Verfahren zum Entfernen von Farbstoffen, Pigmenten und/oder optischen Aufhellern aus Abwässern.**

(30) Priorität: 26.10.82 CH 6231/82

(43) Veröffentlichungstag der Anmeldung:
02.05.84 Patentblatt 84/18

(45) Bekanntmachung des Hinweises auf die Patenterteilung:
23.04.86 Patentblatt 86/17

(84) Benannte Vertragsstaaten:
AT BE DE FR GB IT

(56) Entgegenhaltungen:
AT - B - 254 089
AT - B - 356 017
AT - B - 357 115
DE - A - 1 517 666
DE - A - 2 926 606
DE - B - 2 501 262

(73) Patentinhaber: **GEBRÜDER SULZER
AKTIENGESELLSCHAFT, Zürcherstrasse 9,
CH-8401 Winterthur (CH)**

(72) Erfinder: **Ginocchio, Julio, Rohrhaldenstrasse 35,
CH-8712 Stäfa (CH)**
Erfinder: **Gmünder, Arnold, Scheideggstrasse 26,
CH-8400 Winterthur (CH)**
Erfinder: **Gnieser, Jürgen, Langgrütstrasse 184,
CH-8047 Zürich (CH)**
Erfinder: **Gros, Henry, Dr., Geiselweidstrasse 6/6,
CH-8400 Winterthur (CH)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

## Beschreibung

Die Erfindung betrifft ein Verfahren zum Entfernen von Farbstoffen, Pigmenten und/oder optischen Aufhellern, z.B. der Textil-, Papier-, Leder-, Lebensmittel- und Kunststoffindustrie, aus Abwässern, wobei primäre Flockungsmittel in der Form von Eisen- und Aluminiumverbindungen und sekundäre Flockungshilfsmittel in der Form von Cyanamid-, Melamin- oder Pyridiniumderivaten oder von anderen kationaktiven Organoverbindungen, zugegeben werden, und das resultierende Koagulat aus dem Abwasser abgetrennt wird.

Die vorliegende Erfindung dient zum Entfernen von anionischen Farbstoffen und optischen Aufhellern in gelösten bzw. pseudogelösten Formen, wie Säure- und Metallkomplexfarbstoffe, sowie Substantiv- und Reaktivfarbstoffe, aber auch von ungelösten Dispersionsfarbstoffen und Pigmenten sowie in gelöster Form angewendeten Farbstoffen, die als ungelöste Stoffe erscheinen, wie die Küpen-, Kupfer-, Diazo-, Leukoküpen-, Schwefel-, Naphtol- und Beizenfarbstoffe. Das bedeutet, dass die Erfindung praktisch für alle existierenden Farbstoffe und Pigmente geeignet ist.

Als Flockungsmittel werden die üblichen Eisen- und Aluminiumverbindungen verwendet, wie Sulfate und Chloride sowie Aluminate und Aluminiumpolyhydroxychlorid (APHC).

Unter anderen kationischen Organoverbindungen werden wasserlösliche Organoverbindungen, wie z.B. Polydiallyldimethylammonium, Dodecyldimethylsulfoniumchlorid, Dodecyltrimethylphosphoniumchlorid, verstanden, die durch chemische Umsetzungen der Farbstoffe unlösliche Derivate herstellen.

Aus wirtschaftlichen Gründen wird die Erfindung bevorzugt für die Entfernung der sogenannten Restfärbung angewendet, bei der — nach einer konventionellen Vorreinigung des Abwassers — noch bis zu etwa 20 g/m$^3$ Abwasserfarbstoff vorhanden sind.

Zum Entfärben von Abwässern sind Verfahren der eingangs genannten Art bekannt (CH-C-572 449; DE-A-2 633 636). Bei diesen Verfahren erfolgt die Abtrennung der Koagulate bzw. Flockulate, die aus den zu entfernenden Inhaltsstoffen des Abwassers mit Hilfe der Flockungs- und/oder Flockungshilfsmittel gebildet werden, durch Sedimentation in einer der Flockung nachfolgenden Absetzstufe oder in einer nachfolgenden Filtrationsstufe.

So wird bei einem weiteren Verfahren zum Entfernen von Farbstoffen aus Abwässern (DE-A-2 501 262) eine wässrige Farbstofflösung mit einer Mischung von Melamin-Harz und Eisen- oder Aluminium-Salzen als Flockungsmittel behandelt; die ausgeflockten Farbstoffe werden dabei aus der Flüssigkeit durch Sedimentation oder Filtration in einem Papier-, d.h. einem Oberflächenfilter, ausgeschieden.

In dem Buch «Les Eaux Résiduaires Industrielles» von F. Meinck u.a., Masson, Paris (1977), Seite 302/393, ist für die Behandlung von mit organischen Farbstoffen verschmutzten Abwässern unter «La précipitation chimique» ein Verfahren beschrieben, bei dem sich diese Farbstoffe nach Hinzufügen von Eisen- oder Aluminium-Salzen als Flockungsmittel nach einer Verweilzeit von 15 bis 30 min in einem Mischbecken durch Abscheiden in einem Sedimentationsbecken absetzen, wobei die Verweilzeit in diesem Sedimentationsbecken mindestens 1 1/2 Stunden beträgt.

In der Praxis hat sich gezeigt, dass bei den gefilterten bekannten Verfahren die Abtrennung der Verunreinigungen durch Sedimentation oder Oberflächenfiltration unzureichend ist; eine zuverlässige Farbstoff-Entfernung ist daher überhaupt nicht oder nur dann erreichbar, wenn sehr hohe Mengen an Flockungs- bzw. Flockungshilfsmitteln — zusammengefasst auch als «Fällmittel» bezeichnet — zugegeben werden. Bei derart hohen Fällmittelkonzentrationen werden die entstehenden Kosten hoch. Zudem besteht die Gefahr zu hoher Rest-Fällmittelkonzentrationen im geklärten Abwasser, was gleichzeitig eine Verschmutzung des Vorfluters bedeutet.

Aufgabe der Erfindung ist es, das geschilderte Verfahren zu verbessern, ohne dass die Menge der zugegebenen Flockungs- bzw. Flockungshilfsmittel erhöht werden muss. Diese Aufgabe wird erfindungsgemäss dadurch gelöst, dass das Entfernen der Farbstoffe, Pigmente und/oder Aufheller aus dem Abwasser als an sich bekannte Flockungsfiltration durchgeführt wird, bei der die primären Flockungs- und die sekundären Flockungshilfsmittel vor einem der Filtration dienenden Filterbett aus körnigen Medien dem Rohwasser in einer solchen Weise zugegeben werden, dass die Flockungs- bzw. Flockenbildung mindestens teilweise in der Filtermasse stattfindet, indem man zwischen der letzten Dosierstelle für die Flockungs- und Flockungshilfsmittel und dem körnigen Filterbett eine mittlere Verweilzeit des zu entfärbenden Abwassers unter 45 min vorsieht; dabei können die Verweilzeiten insbesondere zwischen 3 und 30 min betragen.

Die Begrenzung der Verweilzeit gewährleistet, dass — eine ausreichende Fällungsmittelzugabe vorausgesetzt — die Flockenbildung vor dem Filterbett zwar einsetzen kann, aber nicht abgeschlossen wird, so dass die experimentell ermittelten Vorteile der Flockungsfiltration gegenüber einer Flockung mit anschliessender getrennter Abtrennung der Flocken in einem Filter erreicht werden. Die geforderte «Einstellung» der Verweilzeit erfolgt auf einfache Weise durch eine Abstimmung der Durchsatzmengen mit dem in dem genannten Bereich der Anlage zur Verfügung gestellten Volumen. Sehr einfach ist es dabei, bei Änderungen der Durchsatzmengen das Volumen durch Änderungen der Niveauhöhe des Wasserspiegels im Überstauraum des Filterbettes anzupassen.

Für den bei der Dosierung der Fällmittel und ihrer gleichmässigen Verteilung erforderlichen Eintrag von mechanischer Energie können beispielsweise motorisch angetriebene Rührer oder statische Mischelemente verwendet werden, bei denen sich der Energieeintrag durch den in ihnen entstehenden Druckverlust der Strömung ergibt.

Mit dem neuen Verfahren wird nun durch die Mikroturbulenzen im Filterfeld erstens die Kontakthäufigkeit zwischen Fällungsmittelkolloiden und Farbstoffmolekülen wesentlich erhöht; gleichzeitig ist zweitens die Wirksamkeit der Entfernung der so gebildeten Mikroflocken des gefällten Farbstoffes wesentlich grösser als bei den bisher angewandten Verfahren der Sedimentation oder klassischen Filtration, wie durch Versuche bestätigt worden ist.

Mit dem neuen Verfahren werden neben den verschiedenen Farbstoffarten gleichzeitig andere Verunreinigungen, wie Phosphor, Metalle, Mikroorganismen, Schwebstoffe und kolloidale Substanzen entfernt.

Verbesserungen in der Reinigungswirkung des neuen Verfahrens lassen sich erreichen, wenn zusammen mit den primären und sekundären Flockungs- bzw. Flockungshilfsmitteln anorganische Siliziumverbindungen in Mengen von 1- 20 g/m³ in der Form von mindestens Eisen- und/oder Aluminiumoxid enthaltenden Siliziumkomplexen zugegeben werden, wobei als anorganische Siliziumverbindungen insbesondere Kaolinit und/oder kaolinitähnliche Stoffe, wie Dickit, Nakrit, Montmorillonit, Bentonit usw., verwendet werden.

Wird ein Teil des sekundären Flockungshilfsmittels ersetzt beispielsweise durch quaternäre Ammoniumverbindungen, die ebenfalls als kationaktive Flockungshilfs- und Entfärbungsmittel wirken, so lässt sich bei der Flockungsfiltration gleichzeitig eine biozide oder biostatische Wirkung erzielen. Selbstverständlich ist es weiterhin möglich, durch zusätzliche, nicht spezifisch entfärbend wirkende Flockungshilfsmittel, wie z.B. Polyacrylamidderivate, die Elimination anderer Schadstoffe, beispielsweise von Schwebstoffen, zu verbessern.

Im folgenden wird die Erfindung anhand von Ausführungsbeispielen im Zusammenhang mit der Zeichnung näher erläutert.

Fig. 1 zeigt eine Pilotanlage, in der eine Flockungsfiltration durchgeführt werden kann;

Fig. 2 gibt in einem Diagramm in Abhängigkeit von der Menge an zugegebenem entfärbendem Flockungshilfsmittel die Entfärbungsleistung F wieder.

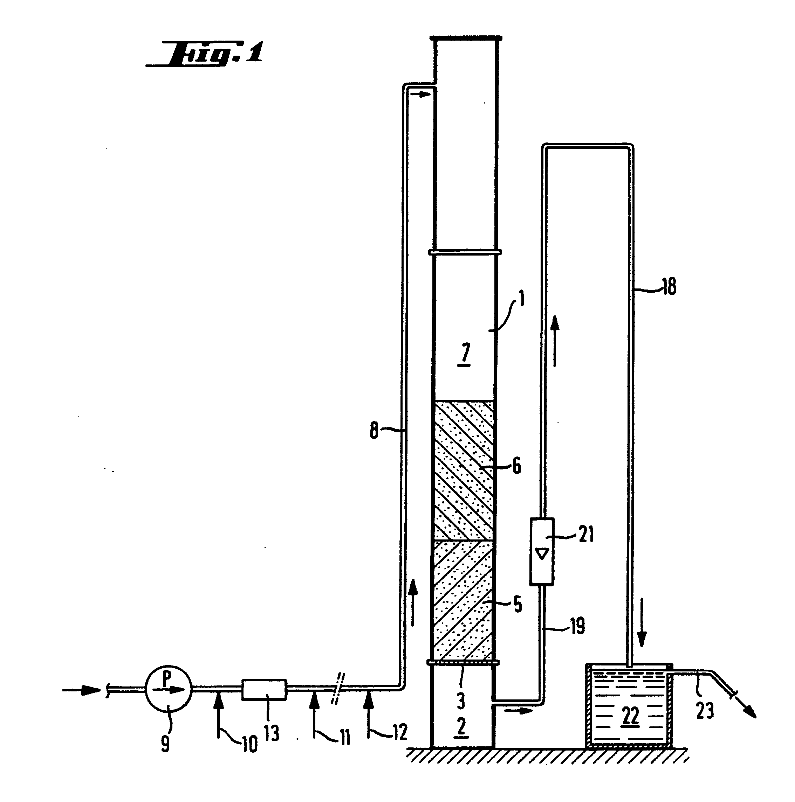

Den Kern der Anlage nach Fig. 1 bildet ein Filterfeld 1, das in einem säulenartigen Hohlkörper aus einem zylindrischen Stahlrohr besteht, dessen Durchmesser bei der gezeigten Versuchsanlage beispielsweise 700 mm ist. Das Filterfeld 1 besteht — von unten nach oben gesehen — aus einem Reinwasserraum 2, der nach oben durch einen Siebboden 3 abgeschlossen ist. Auf diesem lagert als tiefste körnige Schicht 5 eines Zweischicht-Festbettes Quarzsand mit einer Körnung von 0,7 bis 1,2 mm; seine Höhe beträgt 0,4 bis 0,8 m, insbesondere 0,6 m.

Die Sandschicht 5 ist überlagert von einer zweiten Schicht 6 z.B. aus Anthrazit oder Bims mit einer Körnung von 1 - 5 mm, insbesondere 2 - 3 mm, und einer Höhe von 0,5 bis 2 m, insbesondere 0,9 m. In den daran nach oben anschliessenden Überstauraum 7 oberhalb des Festbettes 6 mündet eine Rohwasserzuführleitung 8, in der das zu behandelnde Ab- oder Rohwasser von einer Förderpumpe 9 in das Filterfeld 1 gefördert wird.

Das von der Pumpe 9 geforderte Roh- oder Abwasser passiert in der Leitung 8 Dosierstellen 10 ,11 und 12, zwischen denen eine Mischstrecke 13 vorgesehen ist; diese besteht aus statischen Mischelementen, durch die gleichzeitig der für die Flockungsfiltration notwendige Energieeintrag bewirkt wird.

Die Höhe des Überstauraumes, die etwa 1 - 3 m beträgt, die Förderleistung der Pumpe 9 und der Druckabfall längs der Mischstrecke 13 sind für eine Flockungsfiltration so aufeinander abgestimmt, dass für den Energieeintrag während der Dosierung die (G.t)-Werte zwischen 1000 und 12 000, beispielsweise 6000, eingehalten werden.

Die (G.t)-werte sind bekanntlich eine der die Flockenbildung charakterisierenden Kenngrössen; sie sind das Produkt des Geschwindigkeitsgradienten G mit der Zeitdauer t des Energieeintrags, wobei der Geschwindigkeitsgradient G seinerseits definiert ist als

$$G = \sqrt{E / (V \cdot \mu)}$$

d.h. als Quadratwurzel aus eingebrachter Energie pro Volumeneinheit E/V in Watt oder Nm/sec pro m³ dividiert durch die Viskosität $\mu$ des Abwassers.

Aus dem Reinwassersammelraum 2 führt eine Reinwasserleitung 19, in der ein Durchflussmesser 21 vorgesehen ist, in einer das Niveau im Überstauraum 7 bestimmenden Schleife 18 in ein Reinwassersammelbecken 22, aus dem das gereinigte Abwasser über eine Leitung 23 wegfliesst. Ist es erforderlich, die Verweilzeit vor dem Filterbett zu ändern, so kann sie leicht durch Variationen des Volumens, d.h. der Niveauhöhe im Überstauraum 7, erfolgen.

*Beispiel 1*

*Vergleich zwischen einer Flockung mit getrennter Abtrennung der Flocken und einer Flockungsfiltration.*

Aus einem bereits mechanisch-biologisch geklärten Abwasser ist die Restfärbung zu entfernen, die beispielsweise durch die Anwesenheit von 0,2 bis 4 g/m³ Farbstoff verursacht wird. In zwei parallel zueinander betriebenen Anlagen werden daher zum einen das erfindungsgemässe Verfahren und zum anderen eine Flockung mit anschliessender Abtrennung der Flocken durchgeführt; diese Abtrennung erfolgt im vorliegenden Fall durch eine Oberflächenfiltration mit Hilfe eines feinporigen Filtermaterials aus Mineralfasern (Porengrösse $\leq$ 2 µm).

Die Anlage für die Flockungsfiltration entspricht derjenigen nach Fig. 1; bei der Anlage für eine Flockung mit getrennter Abtrennung der Flocken ist das Filterfeld 1 ersetzt durch einen konventionellen Flockungsreaktor, der aus einem kontinuierlich durchflossenen zylindrischen Gefäss — Durchmesser 0,7 m, Höhe 2 m — besteht. In diesem ist ein langsamer Rührer angeordnet, mit dem bei Verweilzeiten von etwa 1 Stunde (G.t) Werte von 100 000 bis 200 000 erreicht werden; wie erwähnt, erfolgt die anschliessende Abtrennung der Flocken in einem Oberflächenfilter, ehe das Reinwasser dem Sammelbecken 22 zufliesst.

Die mit dem jeweiligen Verfahren erzielte Entfärbung wird durch Extinktionsmessungen im sichtbaren und im UV-Spektralbereich mit Hilfe eines Spektrophotometers ermittelt. Die Messungen werden dabei an nochmals membranfiltrierten Proben des Reinwassers durchgeführt, um eine Beeinflussung der Messung durch Trübstoffe zu vermeiden.

Dem zufliessenden, von der Pumpe 9 geförderten Ab- oder Rohwasser werden bei 10 als primäre Flockungsmittel Eisen- und Aluminium-Ionen — beispielsweise in der Form von Aluminiumsulfat, Eisen-III-Chlorid und/oder Eisen-Chloridsulfat — in Konzentrationen zwischen 0,2 und 4 g/m³ $Me^{+3}$ zudosiert, ehe ein Energieeintrag in der Mischstrecke 13 erfolgt; dieser Energieeintrag bei der Dosierung erreicht (G.t)-Werte von beispielsweise 6000. Die Durchsatzmengen durch das Filterfeld 1 sind so gewählt, dass die mittlere Verweilzeit gemäss der Erfindung zwischen 5 und 10 min beträgt.

An der Dosierstelle 11 werden dann unterschiedliche Mengen von sekundären Flockungshilfsmitteln der erwähnten Art, die mindestens teilweise gleichzeitig als Entfärbungsmittel wirken, in den Rohwasserstrom eingespeist. Diese Flockungshilfsmittel bestehen z.B. aus einem der erwähnten Cyanamid-, Melamin- oder Pyridiniumderivate, wie beispielsweise dem Chlorhydrat, des Diäthylaminoäthydeylamids oder Cetyl-Pyridinium-Chlorid, und werden in Mengen von 1 bis 8 g/m³ Abwasser zugegeben; vor allem zur Verbesserung der Schwebestoffe-Abscheidung mischt man an der Dosierstelle 11 als weiteres Flockungsmittel ohne entfärbende Wirkung noch ein Polyacrylaminderivat in Mengen von 0,05 bis 0,4 g/m³ bei.

Die Dosierstelle 12 bleibt bei dem Vergleich zwischen Flockungsfiltration und Flockung und anschliessender Abtrennung der Flocken unbenutzt.

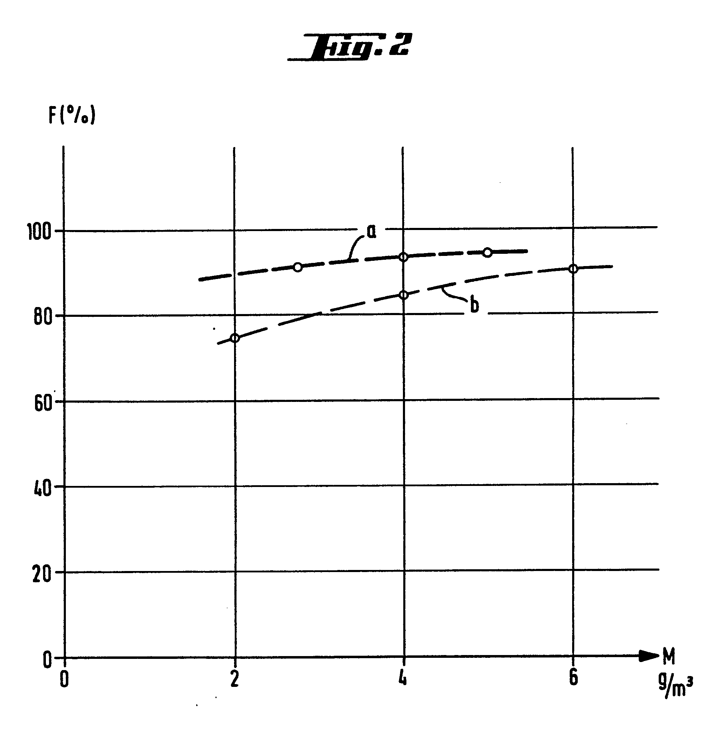

Die Ergebnisse dieser Vergleichsversuche gibt Fig. 2 wieder; auf der Ordinate ist dort die erreichte prozentuale Entfärbung F eingetragen in Abhängigkeit von der Menge M (Abszisse) an zugegebenen sekundären Flockungshilfsmitteln, die gleichzeitig eine Entfärbung bewirken. Die Kurve a verdeutlicht die mit einer Flockungsfiltration nach der vorliegenden Erfindung erreichte Entfärbung; die mit Flockung und separater Abtrennung der Flocken erzielten Werte zeigt die Kurve b.

Die Ergebnisse zeigen eindeutig, dass das Flockungsfiltrationsverfahren zur Entfernung der teils gelösten Färbung wesentlich bessere Leistungen zeigt, als die Verfahrensweise mit Fällung/Flockung und anschliessender Abtrennung des Flockulats/Koagulats. So ist etwa die Hälfte der Fällungsmittel bei der Flockungsfiltration notwendig im Vergleich zur bekannten Verfahrensweise mit Flockung und anschliessender separater Abtrennung der Flocken durch klassische Filtration.

Dass mit der Flockungsfiltration auch die übrigen Schmutzstoffe weitgehend aus dem Abwasser entfernt werden, zeigt sich aus den Kolonnen 1 und 2 der angefügten Tabelle A, in der die Kolonne 1 die üblicherweise für die Wasserqualität herangezogenen Werte für das Roh- oder Abwasser wiedergibt, während die Kolonne 2 diejenigen Werte für das Reinwasser nach dem Filterfeld 1 zeigt.

*Beispiel 2*

*Wirkung einer Zugabe von Fe- oder Al-Siliziumkomplexen als zusätzliche Entfärbungsmittel.*

Bei einer Flockungsfiltration, die in der gleichen Weise wie Beispiel 1 durchgeführt wird, werden an der Dosierstelle 12 zusätzlich als Siliziumkomplexe 2 - 8 g/m³ Kaolinit zugeführt; durch diese Zugabe wird die Entfärbungskapazität des Filterfeldes erheblich gesteigert, so dass die Filterlaufzeit — bestimmt als Laufzeit bis zu einem Farbdurchbruch — etwa auf das Doppelte verlängert ist.

*Beispiel 3*

*Wirkung einer Zugabe von bioziden, quaternären Ammoniumsalzen als Flockungshilfs-, Entfärbungs- und Desinfektionsmittel.*

Für die Ammoniumsalze beträgt die minimale Hemmkonzentration für gram-positive Bakterien 2 bis 5 g/m³ und für gram-negative Bakterien 5 - 50 g/m³.

Ein ähnlich dem ersten vorbehandeltes Abwasser, dessen Qualität in nachstehender Tabelle B in Kolonne 1 wiedergegeben ist, wird in zwei gleichartigen Anlagen untersucht, wie sie im Zusammenhang mit Fig. 1 beschrieben worden sind; in beiden Anlagen erfolgt eine Flockungsfiltration mit gleichen Verweilzeiten von etwa 5 - 10 min. Der Unterschied in der Verfahrensweise beider Anlagen besteht lediglich darin, dass bei einer der Anlagen als Desinfektions- und Entfärbungsmittel ein quaternäres Ammoniumsalz zugegeben wird, das bei der anderen Anlage fehlt.

An der Dosierstelle 10 wird als primäres Flockungsmittel 10 g/m³ APHC (Aluminiumpolyhydroxychlorid mit 18% $Al_2O_3$-Gehalt) beigegeben. Nach dem erwähnten Energieeintrag dosiert man bei 11 als sekundäres Flockungshilfs- und Entfärbungsmittel 2 g/m³ eines Cyanamidderivates, nämlich eines niedrigmolekularen Amin-Amid-Oxomethans, zu, während schliesslich an der Dosierstelle 12,6 g/m³ Dichlor-Benzyl-Dimethyl-Alkyl-Ammonium-Chlorid als Entfärbungs- und Desinfektionsmittel eingespeist werden.

Die Verbesserung des Abwassers ohne die Zugabe von quaternären Ammoniumsalzen ist in Kolonne 2, diejenige mit diesen Salzen in Kolonne 3 der Tabelle B wiedergegeben. Sowohl die Entfärbungswirkung als auch die Desinfektionswirkung dieser Salze sind aus einem Vergleich der beiden Kolonnen 2 und 3 klar ersichtlich. Zusätzlich ist noch eine mikrobiologische Untersuchung des im Festbett 5, 6 zurückgehaltenen Schlammes durchgeführt worden. Hierbei haben sich die in Tabelle C aufgeführten Werte für den Schlamm ohne Ammoniumsalze (Kolonne 1) und für diejenigen mit Ammoniumsalzen (Kolonne 2) ergeben.

Tabelle A

|  |  | Kolonne 1 | Kolonne 2 | Kolonne 3 |
|---|---|---|---|---|
| CSB | g/m³ | 20-100 | 10-70 |  |
| $BSB_5$ | g/m³ | 30 | 10 |  |
| Schwebstoffe | g/m³ | 30 | 5 |  |
| Phosphor | g/m³ | 0.5-7 | 0.2-2 |  |

Tabelle B

|  | Kolonne 1 | Kolonne 2 | Kolonne 3 |
|---|---|---|---|
| Temperatur °C | 12 | 13 | 13 |
| pH-Wert | 7,2 | 7,1 | 7,1 |
| Trübung FE* | 15 | 6 | 1 |
| Schwebstoffe $g/m^3$ | 36 | 3 | 1 |
| Gesamtphosphor $g/m^3$ | 1,8 | 0,5 | 0,2 |
| Farbe Pt/Co | 15 | 8 | 1 |
| Enterokokken 100 $cm^3$ | $10^3$ | $5.10^1$ | 0 |
| Coliforme Keime 100 $cm^3$ | $10^5$ | $1.10^2$ | 1 |
| Saprophyten $cm^3$ | $2.10^4$ | $8.10^2$ | 0.1 |
| Salmonellen 100 $cm^3$ | $8.10^2$ | 2 | 0 |
| CSB $g/cm^3$ | 34 | 7 | 6 |

Tabelle C

|  |  |  |
|---|---|---|
| Enterokokken 100 $cm^3$ | $1.10^6$ | $1.10^1$ |
| Coliforme Keime 100 $cm^3$ | $1.10^9$ | $1.10^2$ |
| Saprophyten $cm^3$ | $1.10^7$ | $1.10^1$ |

\* FE = Formazin-Einheiten
Formazin (Hexamethylentetramin) ist ein Trübstoff zur Herstellung von Standard-Trübungen.

## Patentansprüche

1. Verfahren zum Entfernen von Farbstoffen, Pigmenten und/oder optischen Aufhellern, z.B. der Textil-, Papier-, Leder-, Lebensmittel- und Kunststoffindustrie, aus Abwässern, wobei primäre Flockungsmittel in der Form von Eisen- und Aluminiumverbindungen und sekundäre Flockungshilfsmittel in der Form von Cyanamid-, Melamin- oder Pyridiniumderivaten oder von anderen kationaktiven Organoverbindungen, zugegeben werden, und das resultierende Koagulat aus dem Abwasser abgetrennt wird, dadurch gekennzeichnet, dass das Entfernen der Farbstoffe, Pigmente und/oder Aufheller aus dem Abwasser als Flockungsfiltration durchgeführt wird, wobei die primären Flockungs- und die sekundären Flockungshilfsmittel vor einem der Filtration dienenden Filterbett (1) aus körnigen Medien dem Rohwasser in einer solchen Weise zugegeben werden, dass die Flockung bzw. Flockenbildung mindestens teilweise in der Filtermasse (5, 6) stattfindet, indem man zwischen der letzten Dosierstelle (11 oder 12) für die Flockungs- und Flockungshilfsmittel und der körnigen Filtermasse (5, 6) eine mittlere Verweilzeit des zu entfärbenden Abwassers unter 45 min vorsieht.

2. Verfahren nach Anspruch 1, dadurch gekennzeichnet, dass die Verweilzeiten 3 bis 30 min betragen.

3. Verfahren nach Anspruch 1 oder 2, dadurch gekennzeichnet, dass zusammen mit den primären und sekundären Flockungs- bzw. Flockungshilfsmitteln anorganische Siliziumverbindungen in Mengen von 1 - 20 $g/m^3$ in der Form von mindestens Eisen- und/oder Aluminiumoxid enthaltenden Siliziumkomplexen zugegeben werden.

4. Verfahren nach Anspruch 3, dadurch gekennzeichnet, dass als anorganische Siliziumverbindungen Koalinit und/oder kaolinitähnliche Stoffe verwendet werden.

5. Verfahren nach einem der Ansprüche 1 - 4, dadurch gekennzeichnet, dass als sekundäre Flockungshilfsmittel mindestens teilweise solche mit einer bioziden bzw. biostatischen Wirkung, wie z.B. quaternäre Ammoniumverbindungen, verwendet werden.

6. Verfahren nach einem der Ansprüche 1 - 5, dadurch gekennzeichnet, dass zusätzlich weitere kationaktive Flockungshilfsmittel, wie z.B. Polyacrylamidderivate, zugesetzt werden.

## Claims

1. A process for the removal of dyes, pigments and/or optical brighteners, for example of the textile, paper, leather, foodstuffs and plastics industry, from sewage, primary flocculants in the form of iron and aluminium compounds and secondary flocculant adjuvants in the form of cyanamide, melamine or pyridinium derivatives or of other cation-active organo-compounds being added and the resulting coagulate being separated from the sewage, characterised in that the removal of the dyes, pigments and/or brighteners from the sewage is performed as a flocculation filtration, the primary flocculants and the secondary flocculant adjuvants being so added to the raw water before a filter bed (1) of granular material, the bed serving for filtration, that flocculation or flock formation occurs at least to some extent in the filter composition (5, 6) by arranging for an average dwell time of the sewage to be treated of less than 45 minutes between the final dispensing station (11 or 12) for the flocculants and flocculant adjuvants and the granular filter composition (5, 6).

2. A process according to claim 1, characterised in that the dwell times are from 3 to 30 minutes.

3. A process according to claim 1 or 2, characterised in that inorganic silicon compounds in quantities of 1 - 20 $g/m^3$, in the form of silicon complexes containing at least iron oxide and/or aluminium oxide, are added to the primary flocculants and secondary flocculants adjuvants.

4. A process according to claim 3, characterised in that kaolinite and/or kaolinite-like substances are used as inorganic silicon compounds.

5. A process according to any one of claims 1 to 4, characterised in that at least some of the secondary flocculant adjuvants used are those having a biocidal or biostatic effect, for example, quaternary ammonium compounds.

6. A process according to any of claims 1 - 5, characterised in that other cation-active flocculant adjuvants, such as polyacrylic amide derivatives, are also added.

## Revendications

1. Procédé pour éliminer des colorants, pigments et/ou agents d'éclaircissement optique, par exemple dans l'industrie des textiles, du papier, du cuir, des produits alimentaires et des matières plastiques, d'eaux résiduaires, selon lequel on ajoute des agents primaires de floculation, sous forme de composé du fer et de l'aluminium, et des adjuvants secondaires de floculation, sous forme de dérivés de cyanamide, de mélamine ou du pyridinium, ou d'autres composés organiques à cations actifs, et l'on sépare de l'eau résiduaire le coagulat résultant, procédé caractérisé en ce qu'on effectue l'élimination des colorants, pigments et/ou agents d'éclaircissement de l'eau résiduaire sous forme d'une floculation/filtration, en ajoutant à l'eau brute, avant un lit filtrant (1) en matière grenue servant pour la filtration, l'agent de floculation primaire et l'adjuvant secondaire de floculation de façon que la floculation ou la formation des flocs se produise au moins partiellement dans la masse filtrante (5, 6), en prévoyant entre le dernier poste (11 ou 12) d'introduction dosée de l'agent de floculation et de l'adjuvant de floculation, d'une part, et la masse filtrante grenue (5, 6), d'autre part, un temps moyen de séjour inférieur à 45 minutes pour l'eau résiduaire à décolorer.

2. Procédé selon la revendication 1, caractérisé en ce qu les temps de séjour sont de 3 à 30 minutes.

3. Procédé selon la revendication 1 ou 2, caractérisé en ce qu'avec les agents primaires et secondaires de floculation et adjuvants de floculation, on ajoute, en des quantités de 1 à 20 g/m$^3$, des composés minéraux du silicium sous forme de complexes de silicium contenant au moins de l'oxyde de fer et/ou de l'oxyde d'aluminium.

4. Procédé selon la revendication 3, caractérisé en ce qu'on utilise, comme composés minéraux du silicium, de la kaolinite ou des matières analogues à la kaolinite.

5. Procédé selon l'une des revendications 1 à 4, caractérisé en ce qu'on utilise comme adjuvants secondaires de floculation au moins en partie ceux ayant une action biocide ou biostatique comme, par exemple, des composés d'ammonium quaternaire.

6. Procédé selon l'une des revendications 1 à 5, caractérisé en ce qu'on ajoute en outre d'autres adjuvants de floculation à cations actifs, comme par exemple des dérivés de polyacrylamide.

**Fig.1**

Fig. 2